# EUROPEAN PATENT APPLICATION

(11) **EP 4 227 224 A1**
(43) Date of publication of application: **16.08.2023**
(21) Application number: 23156395.8
(22) Date of filing: 13.02.2023
(51) Int. Cl.: B64D 27/02, B64D 27/24, B64D 31/06, B64D 31/14

(54) **HYBRID-ELECTRIC AIRCRAFT PROPULSION SYSTEM AND METHOD FOR OPERATING THE SAME**

(30) Priority: 11.02.2022 US 202217670031
(71) Applicant: PRATT & WHITNEY CANADA CORP., Longueuil, Québec J4G 1A1 (CA)
(72) Inventor: FREER, Richard, (01BE5) Longueuil, J4G 1A1 (CA); QUILLET, Dominik, Sherbrooke, J1H 2P6 (CA); RANCOURT, David, Sherbrooke, J1R 0G3 (CA)
(74) Representative: Dehns

(57) **Abstract**

A method of operating a hybrid-electric propulsion system (18) for an aircraft includes: a) providing at least one thermal engine sized to provide sufficient thrust to the aircraft for at least one flight mission independent of a second non-thermal engine source of thrust for the at least one flight mission; b) providing at least one electric motor powered by a non-hydrocarbon-fuel-burning electrical energy source, the at least one electric motor configured to provide thrust to the aircraft for the at least one flight mission; and c) selectively providing thrust during one or more segments of the at least one flight mission using the electric motor.

## Description

### BACKGROUND OF THE INVENTION

### Technical Field

The present invention relates to hybrid-electric aircraft propulsion systems and methods for operating the same.

### Background Information

Emission reduction targets and fuel costs have created significant interest in hybrid electric aircraft propulsion systems. Hybrid-electric aircraft propulsion systems combine internal combustion and electric propulsion technologies. The electric propulsion portion uses electrical energy to power an electric motor that in turn may be used to drive a propulsion fan or a propeller. There are environmental and cost benefits to having at least a portion of the power for an aircraft propulsion system come from electric motors. Therefore, improvements to existing hybrid-electric architectures are desirable.

### SUMMARY

According to an aspect of the present invention, a method of operating a hybrid-electric propulsion system for an aircraft is provided that includes: a) providing at least one thermal engine sized to provide sufficient thrust to the aircraft for at least one flight mission independent of a second non-thermal engine source of thrust for the at least one flight mission; b) providing at least one electric motor powered by a non-hydrocarbon fuel burning electrical energy source, the at least one electric motor configured to provide thrust to the aircraft for at least a portion of the at least one flight mission; and c) selectively providing thrust to the aircraft during one or more segments of the at least one flight mission using the electric motor powered by the non-hydrocarbon fuel burning electrical energy source.

According to another aspect of the present invention, a hybrid-electric propulsion system for an aircraft is provided that includes at least one thermal engine and at least one electric motor. The at least one thermal engine is sized to provide sufficient thrust to the aircraft for at least one flight mission for the aircraft independent of a second non-thermal engine source of thrust for the at least one flight mission. The at least one electric motor is powered by a non-hydrocarbon fuel burning electrical energy source. The at least one electric motor is configured to provide thrust to the aircraft for at least a portion of the at least one flight mission.

According to another aspect of the present invention, an aircraft is provided that includes at least one hybrid-electric propulsion system. The hybrid-electric propulsion system includes at least one thermal engine, and at least one electric motor. The at least one thermal engine is sized to provide sufficient thrust to the aircraft for at least one flight mission for the aircraft independent of a second non-thermal engine source of thrust for the at least one flight mission. The at least one electric motor is powered by a non-hydrocarbon fuel burning electrical energy source. The at least one electric motor is configured to provide thrust to the aircraft for at least a portion of the at least one flight mission.

Optionally, and in accordance with any of the above, the hybrid-electric propulsion system may include a system controller in communication with the at least one thermal engine, the at least one electric motor, and a memory device storing instructions. The instructions when executed cause the system controller to selectively operate the at least one electric motor during one or more segments of the at least one flight mission using the electric motor to provide thrust to the aircraft.

Optionally, and in accordance with any of the above, the non-hydrocarbon fuel burning electrical energy source may include one or more batteries.

Optionally, and in accordance with any of the above, a propeller driven by a power shaft in communication with the at least one thermal engine and the at least one electric motor may be included.

Optionally, and in accordance with any of the above, a fan driven by a power shaft in communication with the at least one thermal engine and the at least one electric motor may be included.

Optionally, and in accordance with any of the above, the power shaft may be in communication with a gear box that is in communication with the at least one thermal engine and the at least one electric motor.

Optionally, and in accordance with any of the above, the at least one thermal engine and the at least one electric motor may be disposed in a parallel configuration.

Optionally, and in accordance with any of the above, the at least one thermal engine may be a gas turbine engine.

Optionally, and in accordance with any of the above, the at least one flight mission may have a flight mission length in the range of about 100 nautical miles (nm) (190 km) to about 350 nm (650 km), and the at least one thermal engine may be sized to satisfy a one engine inoperative requirement independent of the at least one electric motor for the at least one flight mission.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a diagrammatic illustration of an aircraft powered by a pair of hybrid-electric aircraft propulsion systems according to an embodiment of the present disclosure.
FIG. 2 is a diagrammatic cross-sectional view of a gas turbine engine embodiment.
FIG. 3 is a schematic illustration of a parallel hybrid-electric powertrain embodiment of the present disclosure.
FIG. 4 is a schematic comparison of different powertrain systems.

### DETAILED DESCRIPTION

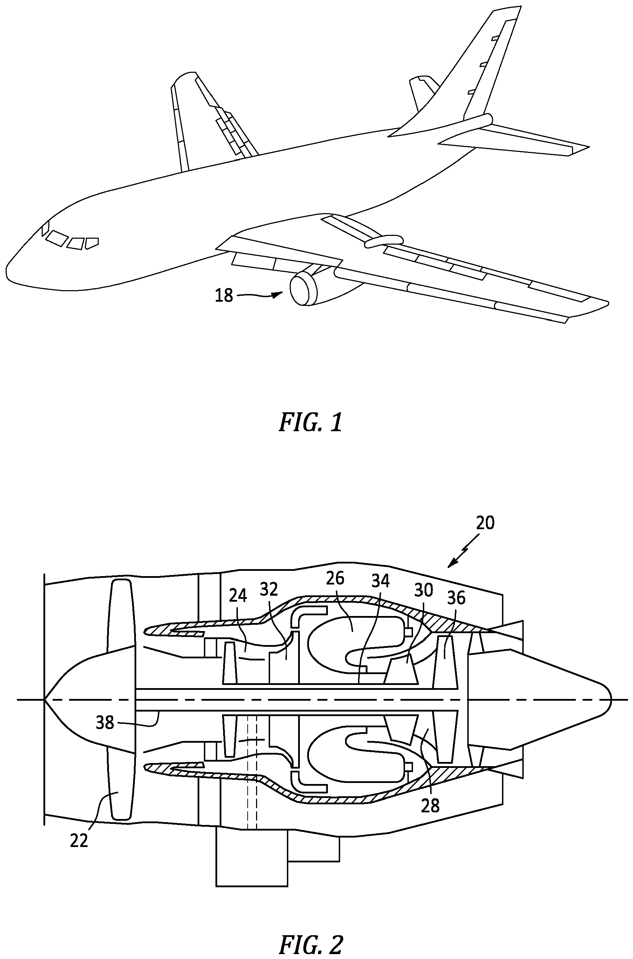

The present disclosure is directed to a hybrid-electric aircraft propulsion system 18 and method. In some embodiments, one or more present disclosure hybrid-electric aircraft propulsion systems 18 may be utilized as an aircraft propulsion system. FIG. 1 diagrammatically illustrates an aircraft including a pair of present disclosure hybrid-electric aircraft propulsion systems 18. The present disclosure may be utilized in aircraft applications other than the two engine aircraft shown in FIG. 1.

The present disclosure hybrid-electric aircraft propulsion system 18 uses power generated by at least one thermal engine and power generated by at least one electric motor. The term "thermal engine" as used herein includes various types of gas turbine engines, piston engines, and the like that combust traditional aviation fuels and/or sustainable aviation fuels (SAFs). FIG. 2 diagrammatically shows a thermal engine in the form of a gas turbine engine 20. The gas turbine engine 20 comprises in serial flow communication, a fan 22 through which ambient air is propelled, a compressor section 24 for pressurizing the air, a combustor 26 in which the compressed air is mixed with fuel and ignited for generating an annular stream of hot combustion gases, and a turbine section 28 for extracting energy from the combustion gases. High pressure rotor(s) 30 of the turbine section 28 are drivingly engaged to high pressure rotor(s) 32 of the compressor section 24 through a high pressure shaft 34. Low pressure rotor(s) 36 of the turbine section 28 are drivingly engaged to the fan rotor 22 and to other low pressure rotor(s) (not shown) of the compressor section 24 through a low pressure shaft 38 extending within the high pressure shaft 34 and rotating independently therefrom.

Although illustrated as a turbofan engine in FIG. 2, the gas turbine engine 20 may alternatively be another type of gas turbine engine, for example a geared turbofan engine, a turboshaft engine, a turboprop engine, or a turbojet engine. Examples of geared turbofan engine architecture are disclosed in U.S. Patent Nos. 9,726,083; 10,830,153; 11,053,843; 11,073,106; and 11,118,507. In some embodiments, the thermal engine may be a piston engine or a rotary engine. In addition, although the engine is described herein for aircraft flight applications, it should be understood the present disclosure may also be used with other flight applications; e.g., unmanned flight vehicles.

Embodiments of the present disclosure hybrid-electric aircraft propulsion system 18 may include a system controller 40 in communication with the with other components within the system, including the thermal engine, the electric motor, a reduction gearbox, and the like to control and or receive signals therefrom to perform the functions described herein. The system controller 40 may include any type of computing device, computational circuit, processor(s), CPU, computer, or the like capable of executing a series of instructions that are stored in memory. The instructions may include an operating system, and/or executable software modules such as program files, system data, buffers, drivers, utilities, and the like. The executable instructions may apply to any functionality described herein to enable the system to accomplish the same algorithmically and/or coordination of system components. The system controller 40 may include a single memory device or a plurality of memory devices and the present disclosure is not limited to any particular type of memory device.

Historically, fuel burning thermal engines have been the sole propulsion source for an aircraft. Operating costs (e.g., fuel consumption) have become exceedingly important in an industry that is extremely competitive. Operating efficiency improvements of a single percent can provide a significant advantage. Coupled with ever increasing governmental emission limitations, the aircraft industry has searched for solutions to these issues. An all-electric propulsion system may address both fuel costs and emissions. Current battery technology (e.g., battery energy density) limits the current viability of aircraft electric propulsion systems. In view thereof, the aircraft industry has examined hybrid-electric propulsion as a promising alternative to both gas turbine engine (GTE) propulsion alone and to fully electric propulsion. Hybrid-electric propulsion allows the use of combustible fuels and non-hydrocarbon-burning electric energy sources such as batteries or fuel cells while increasing effective aircraft efficiency on different flight missions; e.g., regional aircraft. Many currently proposed hybrid-electric propulsion systems utilize a downsized GTE paired with an electric motor (EM). The downsized GTE is believed by some to provide better fuel efficiency, albeit at a decreased ability to produce the power required to power the aircraft. The EM portion of the hybrid-electric propulsion system is relied upon to augment the power provided by the downsized GTE. The term "downsized" as used herein refers to a GTE (or other thermal engine) that produces less power (e.g., output shaft power, propeller shaft power, thrust, or the like) than is required from a GTE capable of powering an aircraft alone or in combination with at least one other GTE to meet applicable regulatory regulations.

Notwithstanding the benefits of a hybrid-electric propulsion system (e.g., lower fuel costs, lower emissions, etc.), a hybrid-electric propulsion system must still satisfy operational regulations. A key such regulatory requirement in the U.S. is found in 14 C.F.R. §25.121 "Climb: one-engine-inoperative" ("OEI"). The OEI regulation requires an aircraft to be able to maintain various positive climb gradients to the end of the takeoff path as well as various positive climb gradients associated with landing configurations and go-around power. To be clear, the OEI is one of many regulations that must be satisfied and is provided herein as an example of such a regulation. For those proposed hybrid aircraft powertrain configurations that use a downsized GTE combined with an electric motor, this typically means that the electric motor is required to supplement the downsized GTE during certain flight mission events including an OEI scenario. Hence, the electric motor sub-system (including the EM and the non-hydrocarbon-burning energy source for the EM) must be configured to retain sufficient power and energy in combination with the downsized GTE to satisfy the OEI requirements at the end of a flight mission. The total battery power and energy available must account for both the battery power and energy used in takeoff and/or during flight, and that required to augment the downsized GTE at end of flight to satisfy the OEI requirements. Therefore, the end of flight battery power and energy requirements in a downsized GTE hybrid-electric propulsion system can limit the amount of battery power and energy that may be used at takeoff and/or during flight. These "end of flight" OEI requirements can, in turn, reduce the fuel carrying capability thereby reducing maximum flight duration, or they can reduce the payload capability. Of course, future improvements in battery technology (e.g., greater battery energy density) may improve some of these limitations.

The present disclosure is directed to a hybrid-electric aircraft propulsion system 18 that provides an alternative solution, one that is currently feasible and one that will remain feasible with future improvements in battery technology. Embodiments of the present disclosure hybrid-electric aircraft propulsion system 18 utilize one or more electric motors powered by one or more electrical energy sources in combination with a thermal engine; e.g., a fossil-fuel burning (or stated otherwise a hydrocarbon based fuel) in a novel and unobvious manner. Embodiments of the present disclosure may use one or more batteries as an electric energy source. The present disclosure is not limited to using batteries, however. For example, in some embodiments the electrical energy source may include fuel cells or the like. The present inventor proposes, contrary to currently available approaches, that a hybrid-electric aircraft propulsion system 18 that uses a thermal engine (described herein in terms of a GTE, but not limited thereto) sized to power an aircraft alone or in combination with at least one other GTE and sized to meet applicable regulatory regulations can be used in combination with an EM to provide a viable powertrain that provides significant fuel efficiency benefits, reduced emissions, and meets regulatory requirements.

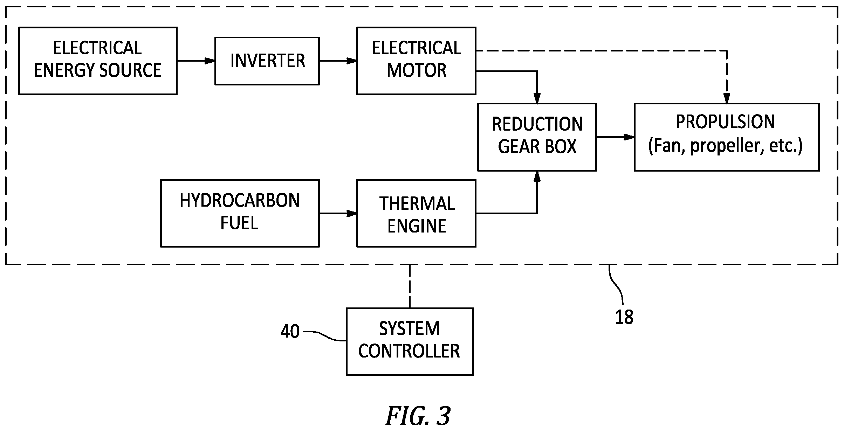

An example of a hybrid-electric aircraft propulsion system 18 according to the present disclosure (e.g., including a fully sized GTE and an EM) is schematically shown in FIG. 3. To facilitate the description hereinafter and unless otherwise noted, the present disclosure hybrid-electric aircraft propulsion system 18 and method are described in terms of a single GTE and a single EM in a parallel configuration. The parallel configuration diagrammatically shown in FIG. 3 shows the EM provided power/thrust to a reduction gearbox independently of the GTE; i.e., a portion of the aircraft's propulsive torque is produced by the GTE and a portion of the aircraft's propulsive torque is produced by the EM independently of one another. In some aircraft applications, a plurality of parallel single GTE / EM hybrid-electric aircraft propulsion systems 18 may be included; e.g., a twin engine aircraft - hence, the applicability of the OEI regulation. Furthermore, aspects of the present disclosure hybrid-electric aircraft propulsion system 18 may have applicability to system configurations other than parallel configurations; e.g., a GTE having one or more components power assisted by an EM.

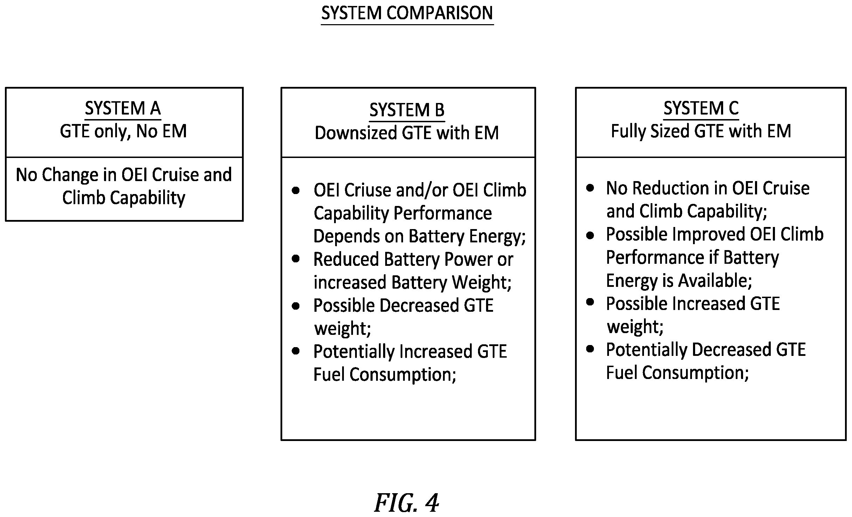

Referring to FIG. 4, to illustrate the viability of the present disclosure hybrid-electric aircraft propulsion system 18, consider three different propulsion systems: 1) System "A" - a propulsion system that includes only a GTE (e.g., the GTE original to the aircraft), no EM; 2) System "B" - a hybrid propulsion system that includes a downsized GTE and an EM; and 3) System "C" - a hybrid propulsion system that includes a fully powered GTE and an EM. System C has a fully powered GTE; one that has not been downsized and is therefore capable of providing the aircraft power requirements without EM augmentation - e.g., the GTE original to the aircraft. System C is assumed, therefore, to be able to satisfy OEI requirements without EM augmentation. For purposes of this illustration, it is assumed that all three systems are used in identical aircraft applications (e.g., a 50-seat twin turboprop regional aircraft), where System A is the aforesaid aircraft with the original GTE, System B has the original GTE replaced with a downsized GTE and an EM coupled in parallel with a reduction gearbox ("RGB"), and System C has the original GTE (or one similar in size) and an EM coupled in parallel with a RGB. The total installed power in all three systems is set to be at least the power installed in the baseline aircraft. The total installed power for the three systems is not, however, necessarily equal. Systems A and C each have a GTE that provides sufficient power to power the aircraft and meet regulatory requirements; e.g., OEI. Hence, if Systems A and C are assumed to have the GTE original to the aircraft, or an equivalent thereof, then the total installed power for System C will exceed that of System A. For each portion of a flight profile (e.g., taxi out, takeoff, climb, level, descent, landing, taxi in, loiter, and OEI climb), the power requirement may be prioritized between the GTE or the EM; i.e., GTE power may be maximized, with the EM providing augmentation power if required, or conversely the EM power may be maximized, with the GTE providing augmentation power, or the GTE and the EM can each be operated each at a fraction of their maximum power. The payload of the aircraft (e.g., the number of people transported) is assumed the same for each System.

The efficiency of the GTE in Systems A and C is assumed to be the same. The efficiency of a GTE in an aircraft application is a function of its maximum takeoff power rating. To explain further, the efficiency of a GTE typically improves as power increases (and conversely has low efficiency at low power) and efficiency is typically best when the GTE is operated at its respective power limits. This is understood to be the basis behind the conventional theory that downsizing a GTE for a given application offers efficiency benefits; i.e., that for the same power requirement a smaller engine operating at a higher percentage of its maximum power rating is thought to be more efficient than a larger engine operating at a lower percentage of its maximum power rating. Our investigation found, in contrast to conventional theory, for at least some applications and embodiments of engines, such as those discussed herein, unexpectedly there is very little difference or benefit between a downsized GTE and a fully powered GTE at cruise conditions. In fact, to the contrary, efficiency improvements may be derived by the configurations and sizing disclosed in the present application. See also the article "Parallel Hybrid-Electric Powertrain Sizing on Regional Turboprop Aircraft with Consideration for Certification Performance Requirements", American Institute of Aeronautics and Astronautics Aviation Forum, August 2-6, 2021, AIAA Aviation 2021 Forum; DOI: 10.2514/6.2021-2443.

For purposes of this illustration, a flight profile of 270 nautical miles (nm) (500 km) is chosen comprising different flight segments; e.g., taxi out, takeoff, climb, level, descent, landing, taxi in, alternate OEI cruise, OEI loiter, and OEI missed approach climb segment ("OEI climb"). The OEI climb segment is initially considered for all three systems. However, as stated above Systems A and C each have a GTE operable to provide sufficient power without an EM and are therefore adequate to meet OEI regulatory requirements without augmentation from the EM. In view thereof, the OEI climb and cruise are considered to be satisfied by having sufficient fuel to meet the aforesaid requirements. Furthermore, since the OEI climb is completed within one minute, fuel burn during this segment is considered negligible relative to the total aircraft fuel load. Thus, OEI climb requirement is considered to negligibly effect the efficiency of Systems A and C. The downsized GTE of System B, on the contrary, requires EM augmentation to satisfy OEI climb requirements at end of flight and therefore either requires additional battery capacity (e.g., more batteries and therefore more weight in the aircraft) or has less available battery power / EM augmentation available during the flight due to the need for a battery reserve to satisfy OEI requirements; i.e., if GTE is downsized to the extent that the EM power and battery energy is needed to maintain level flight at a safe altitude in the event of a loss of an engine, the battery energy needed during OEI cruise will have an even greater impact on the battery energy that can be used during the normal mission and/or a greater impact on the range/payload capacity of the aircraft. It should be noted that the flight distance of 270 nm (500 km) is arbitrarily chosen for this flight profile illustration and the present disclosure hybrid-electric aircraft propulsion system 18 is not limited thereto. At present, commercial flights are available having a flight distance anywhere from 100 nm (190 km) commuter flights to extended flight missions that exceed 11,000 nm (20,000 km). Regional aircraft, with which the present disclosure is understood to provide particular utility, typically have a flight distance in the range of 100-350 nm (190 - 650 km). The present disclosure is not limited for use in any particular flight distance.

The above analysis illustrates that the OEI climb regulatory requirement is an important factor when considering efficiency. A GTE that has not been downsized is capable of providing the aircraft power requirements without EM augmentation. The downsized GTE and battery system (i.e., System B) likely requires either more battery power and energy (i.e., more batteries, more weight) to satisfy the OEI climb or cruise requirements relative to fully powered GTE system (i.e., System C) or has less EM augmentation available during the flight as a result of the battery power and energy reserve required to satisfy the OEI end of flight requirements. Regarding the former (System B), an increase in the weight due to "extra" batteries either increases the takeoff weight of the aircraft which decreases the fuel efficiency of the system or it can reduce the payload available which reduces the usefulness and cost effectiveness of the aircraft.

In summary, a hybrid-electric powertrain (and associated method) utilizing a thermal engine sized to power an aircraft alone or in combination with at least one other GTE and sized to meet applicable regulatory regulations, used in combination with an EM provides a viable aircraft powertrain that provides significant fuel efficiency benefits and reduced emissions. The present disclosure ensures that appropriate power availability is available for emergency scenario at any time regardless of the energy remaining in batteries. At the same time, the present disclosure hybrid-electric aircraft propulsion system 18 and method can be used to reduce fuel burn on flight missions, and consequently to lower the aircraft's emissions.

An example of a present disclosure method for operating a hybrid-electric propulsion system for an aircraft includes: a) providing at least one thermal engine sized to provide sufficient power / thrust for at least one flight mission independent of a second non-thermal engine source of power for the at least one flight mission; b) providing at least one electric motor powered by one or more batteries, the at least one electric motor configured to provide power / thrust during the at least one flight mission; and c) selectively providing power / thrust during one or more segments of the at least one flight mission using the battery powered electric motor.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. A method of operating a hybrid-electric propulsion system (18) for an aircraft, the method comprising:
providing at least one thermal engine sized to independently provide sufficient thrust to the aircraft for at least one flight mission;
providing at least one electric motor powered by a non-hydrocarbon-fuel-burning electrical energy source, the at least one electric motor configured to provide thrust to the aircraft for at least a portion of the at least one flight mission; and
selectively providing thrust to the aircraft during one or more segments of the at least one flight mission using the electric motor powered by the non-hydrocarbon-fuel-burning electrical energy source.

2. The method of claim 1, wherein the non-hydrocarbon-fuel-burning electrical energy source includes one or more batteries.

3. The method of claims 1 or 2, further comprising a propeller driven by a power shaft in communication with the at least one thermal engine and the at least one electric motor.

4. The method of any preceding claim, further comprising a fan (22) driven by a power shaft (38) in communication with the at least one thermal engine and the at least one electric motor.

5. The method of claims 3 or 4, wherein the power shaft (38) is in communication with a gear box that is in communication with the at least one thermal engine and the at least one electric motor, and the at least one thermal engine and the at least one electric motor are disposed in a parallel configuration.

6. The method of claim 5, wherein the at least one thermal engine is a gas turbine engine (20).

7. The method of any preceding claim, wherein the at least one flight mission has a flight mission length in the range of about 100 nautical miles (nm) (190 km) to about 350 nm (650 km), and the at least one thermal engine is sized to satisfy a one engine inoperative requirement independent of the at least one electric motor for the at least one flight mission.

8. A hybrid-electric propulsion system (18) for an aircraft, comprising:
at least one thermal engine sized to independently provide sufficient thrust to the aircraft for at least one flight mission for the aircraft; and
at least one electric motor powered by a non-hydrocarbon-fuel-burning electrical energy source, the at least one electric motor configured to provide thrust to the aircraft for at least a portion of the at least one flight mission.

9. The system of claim 8, further comprising a system controller (40) in communication with the at least one thermal engine, the at least one electric motor, and a memory device storing instructions, which instructions when executed cause the system controller (40) to selectively operate the at least one electric motor during one or more segments of the at least one flight mission using the electric motor to provide thrust to the aircraft.

10. The system of claims 8 or 9, wherein the non-hydrocarbon-fuel-burning electrical energy source includes one or more batteries.

11. The system of any of claims 8 to 10, further comprising a fan (22) or propeller driven by a power shaft (38) in communication with the at least one thermal engine and the at least one electric motor.

12. The system of claim 11, wherein the power shaft (38) is in communication with a gear box that is in communication with the at least one thermal engine and the at least one electric motor, and the at least one thermal engine and the at least one electric motor are disposed in a parallel configuration.

13. The system of claim 12, wherein the at least one thermal engine is a gas turbine engine (20).

14. The system of any of claims 8 to 13, wherein the at least one flight mission has a flight mission length in the range of about 100 nautical miles (nm) (190 km) to about 350 nm (650 km), and the at least one thermal engine is sized to satisfy a one engine inoperative requirement independent of the at least one electric motor for the at least one flight mission.

15. An aircraft comprising at least one hybrid-electric propulsion system (18) according to any of claims 8 to 14.
